# FASCICULE DE BREVET EUROPEEN

(11) **EP 2 324 481 B1**
(45) Date de publication et mention de la délivrance du brevet: **11.12.2013**
(21) Numéro de dépôt: 09811134.7
(22) Date de dépôt: 07.09.2009
(51) Int. Cl.: G21C 19/18, G21C 19/32

(54) **DISPOSITIF DE PREHENSION D'ELEMENTS COMBUSTIBLES, SYSTEME ET PROCEDE DE MANUTENTION ASSOCIES**
VORRICHTUNG ZUM GREIFEN VON BRENNSTOFFELEMENTEN SOWIE ENTSPRECHENDE HANDHABUNGS-SYSTEM UND METHODE
DEVICE FOR GRIPPING FUEL ELEMENTS AND RELATED HANDLING SYSTEM AND METHOD

(30) Priorité: 08.09.2008 FR 0856016
(43) Date de publication de la demande: 25.05.2011
(73) Titulaire: Areva NC, 75009 Paris (FR)
(72) Inventeur: BARRIER, Patrick, F-50100 Cherbourg (FR)
(74) Mandataire: Ilgart, Jean-Christophe
(86) Numéro de dépôt international: PCT/EP2009/061516
(87) Numéro de publication internationale: WO 2010/026241

(56) Documents cités:
- EP-A- 0 360 651
- FR-A- 2 368 121
- FR-A- 2 699 519
- GB-A- 1 390 303

## Description

### DOMAINE TECHNIQUE

L'invention concerne le domaine de la manutention d'éléments combustibles.

Elle concerne plus particulièrement un dispositif conçu à cette fin qui permet, en cas de survenance d'une panne, d'offrir une solution pour déposer en toute sécurité l'élément combustible manutentionné.

### ART ANTÉRIEUR

La manutention d'éléments combustibles de type LWR s'effectue par préhension d'éléments combustibles, avec généralement les éléments à manutentionner en position de prise initiale verticale.

Dans la conception actuelle, un système de levage vertical est implanté au sein d'une cellule d'alimentation pour permettre l'agrippement ou saisie des éléments combustibles usés, partiellement immergés en position verticale dans un bassin. Une fois la saisie réalisée, une chaîne pousseuse effectue le levage vertical et la poussée à l'horizontale vers une cellule de cisaillage dans laquelle les éléments combustibles usés sont cisaillés en tronçons avant leur dissolution dans une cuve, appelée dissolveur, remplie d'acide.

Cette manutention doit se faire en toute sécurité et les éléments combustibles doivent toujours pouvoir être déposés en lieu sûr, quels que soient les cas de défaillance susceptibles de se produire et ce, notamment afin de pouvoir remettre l'installation en état. En outre, en cas de défaillance, le dépannage doit pouvoir se faire sans intervention humaine, c'est-à-dire à distance uniquement par des moyens télé-opérés.

Les équipements de manutention des éléments combustibles actuellement connus sont soit des équipements de manutention verticale soit des systèmes de poussée.

Il n'existe à ce jour aucun dispositif qui assure à la fois des fonctions de manutention verticale et de poussée horizontale, cette dernière étant requise pour permettre le cisaillage des combustibles.

Le but de l'invention est donc de proposer une solution de manutention des éléments combustibles permettant à la fois les fonctions de manutention verticale et de poussée horizontale, afin de réaliser l'enlèvement en toute sécurité des éléments combustibles et ce, même en cas de défaillance de tout ou partie du système de manutention.

Les documents FR2368121, EP0360651, FR2699519 et GB1390303 montrent des dispositifs de manutention selon l'art antérieure.

### EXPOSÉ DE L'INVENTION

A cet effet, sous un premier aspect, l'invention concerne un dispositif de préhension d'éléments combustibles comprenant :
- un chariot principal d'axe longitudinal,
- une pince accouplée au chariot principal et adaptée pour agripper la tête des éléments combustibles,
- un chariot secondaire d'axe longitudinal comprenant des moyens d'attache à une chaîne de levage/pousseuse.

Selon l'invention, les chariots principal et secondaire sont accouplés entre eux par des moyens pour transmettre les efforts exercés sur les moyens d'attache lors d'un levage du dispositif et lors d'une poussée horizontale sur le dispositif, les moyens de transmission d'effort sont agencés en liaison démontable entre les chariots principal et secondaire, et le désaccouplement entre le chariot principal et le chariot secondaire est réalisé, lorsque le chariot secondaire est bloqué au niveau de ses attaches par démontage de la liaison des moyens de transmission d'effort avec les chariots, le démontage étant réalisé uniquement par l'application d'une force de traction et d'une force de poussée exercées sur le chariot principal, la traction s'effectuant vers le chariot secondaire.

L'invention réside ainsi dans le fait qu'elle propose un dispositif de préhension des éléments combustibles qui permet de réaliser à la fois les fonctions de manutention des combustibles prélevés en position verticale, de poussée des combustibles prélevés en position horizontale (grâce aux chariots) et qui autorise le dépannage à distance par des moyens appelés télé-opérés (grâce au désaccouplement possible entre les chariots).

Autrement dit, le désaccouplement entre chariots du dispositif de préhension permet, en cas de panne en position verticale ou horizontale, de libérer les éléments combustibles prélevés et, d'effectuer les opérations de maintenance.

L'intérêt d'un accouplement facilement démontable entre les différentes parties du dispositif de préhension est donc d'offrir une solution en cas de panne pour déposer la charge (éléments combustibles prélevés et leur support) en toute sécurité et permettre les opérations de réparation. Les cas de panne considérés sont un blocage de la chaîne de levage ou pousseuse et une absence d'alimentation électrique sur le dispositif de préhension.

Le désaccouplement ainsi prévu dans le cadre de l'invention est réalisé facilement selon un unique mouvement mécanique de traction/poussée entre les chariots. Ainsi, en cas de défaillance, il n'y a pas d'équipement complexe à prévoir pour réaliser le désaccouplement.

La tête des éléments combustibles agrippés par le dispositif de préhension selon l'invention se présente soit sous la forme d'une anse pour les éléments combustibles de type BWR, soit sous la forme d'une pièce évidée intérieurement pour les éléments combustibles de type PWR. Ainsi tout élément combustible de type LWR (BWR + PWR) peut être agrippé par le dispositif de préhension selon l'invention.

Selon un mode de réalisation avantageux, le ré-accouplement entre le chariot principal et le chariot secondaire est réalisé, lorsque le chariot secondaire est bloqué au niveau de ses attaches, par remontage de la liaison des moyens de transmission d'effort avec les chariots, le remontage de la liaison s'effectuant uniquement par l'application d'une force de traction et d'une force de poussée exercées sur le chariot principal exercé sur le chariot principal, la poussée s'effectuant vers le chariot secondaire.

Avantageusement, les moyens de transmission d'efforts, en liaison démontable entre les chariots principal et secondaire, comprennent :
- une première clavette, montée sur le chariot principal en étant basculante transversalement à l'axe longitudinal et en butée contre le chariot secondaire pour permettre la transmission des efforts exercés sur les moyens d'attache lors de la poussée horizontale,
- une deuxième clavette, montée sur le chariot principal pivotante orthogonalement à l'axe longitudinal et en butée contre le chariot secondaire pour permettre la transmission des efforts exercés sur les moyens d'attache lors du levage; dispositif dans lequel la traction exercée sur le chariot principal permet le basculement de la première clavette, le mouvement relatif du chariot principal vers le chariot secondaire, puis le pivotement de la deuxième clavette, la première clavette basculée et la deuxième clavette pivotée restant chacune dans une position libre de toute butée contre le chariot secondaire.

Le chariot principal peut comprendre deux parties rigides reliées entre elles par une liaison souple dont :
- une est accouplée avec la pince et, comprend un peson électronique permettant de contrôler électriquement des efforts de traction ou de compression exercés sur ladite partie rigide supportant la pince;
- l'autre comprend un chariot dit chariot de tête accouplé avec le chariot secondaire et une tulipe de préhension par laquelle la traction/poussée de désaccouplement entre le chariot de tête et le chariot secondaire est réalisé.

Selon une variante de réalisation, le chariot principal comprend :
- un moteur électrique,
- un arbre creux monté en translation avec l'une de ses extrémités en engrènement de type vis/écrou avec le moteur électrique et avec l'autre de ses extrémités en appui contre une partie des branches de préhension de la pince avec, l'actionnement du moteur électrique provoquant la translation de l'arbre dans un sens et simultanément le rapprochement ou l'écartement des branches de préhension de la pince par basculement orthogonalement à l'axe.

Le dispositif de préhension selon l'invention comprend avantageusement un levier d'accouplement fixé au chariot principal et agencé pour constituer un bras de levier pour faire translater l'arbre et le désaccoupler de la pince, le bras de levier étant adapté pour être manipulé par des moyens télé-opérés. Ainsi, en cas de défaillance du moteur électrique, il est possible par les moyens télé-opérés de désaccoupler la pince agrippant la tête des éléments combustibles et ainsi libérer ces derniers, par exemple dans une cellule de cisaillage des éléments combustibles.

Les moyens télé-opérés convenant à l'invention sont tous ceux utilisés habituellement ou pouvant être utilisés dans un environnement de recyclage de combustible nucléaire, en particulier au niveau de la cellule d'alimentation et de contrôle en amont de la cellule de cisaillage de combustibles usés à recycler.

Selon un mode de réalisation du dispositif de préhension,
- la pince comprend un corps sur lequel sont montées basculantes les branches de préhension et sur lequel est montée coulissante une tige selon l'axe entre les branches ;
- l'arbre creux comprend intérieurement une tige qui y est fixée, la tige de l'arbre creux étant en appui contre la tige de pince, la longueur de la tige de pince étant telle que, dans l'une des positions extrêmes rapprochée ou écartée des branches de pinces correspondant à la position d'agrippement de la tête des éléments de combustible, il y ait un contact direct entre cette dernière et la tige de pince.

De préférence :
- la tige fixée à l'intérieur de l'arbre creux comprend une protubérance qui s'étend transversalement à l'axe en formant un drapeau,
- le chariot principal comprend un premier détecteur de position agencé de sorte à être en regard du drapeau pour détecter électriquement le contact direct entre la tête des éléments de combustible et la tige de pince.

Selon un mode de réalisation avantageux de l'invention,
- le chariot principal comprend des doigts montés basculants orthogonalement à l'axe longitudinal,
- le corps de pince comprend une paroi avec décrochements,
- l'arbre comprend des reliefs fixés à sa périphérie ; l'accouplement entre la pince et l'arbre étant réalisé par le basculement des doigts par les reliefs et par l'appui des doigts basculés contre les décrochements du corps de pince.

En tant que moyens pour verrouiller l'accouplement entre le chariot principal et la pince, il est prévu avantageusement une goupille insérée dans la paroi du corps de pince transversalement à l'axe longitudinal du corps principal et permettant le blocage en translation de l'un par rapport l'autre, la goupille étant adaptée pour être enlevée par des moyens télé-opérés. Ainsi, comme expliqué par la suite, en cas de défaillance l'enlèvement de cette goupille par moyens télé-opérés permet de dégager la pince du chariot principal.

Selon une variante de réalisation,
- l'arbre creux comprend une protubérance qui s'étend transversalement à l'axe en formant un drapeau,
- le chariot principal comprend un premier et un deuxième détecteur de position agencés chacun de chacun de sorte à être en regard du drapeau dans une position translatée donnée de l'arbre creux pour détecter électriquement une position translatée donnée des reliefs et donc le basculement ou non des doigts.

Selon une autre variante avantageuse de réalisation,
- le corps de pince comprend une protubérance qui s'étend transversalement à l'axe en formant un drapeau,
- le chariot principal comprend un troisième détecteur de position agencé de sorte à être, une fois la pince accouplée avec le chariot principal, en regard du drapeau qui détecte ainsi électriquement la présence de la pince.

Sous un autre aspect, l'invention concerne un système de manutention d'éléments combustibles comprenant :
- un pont basculeur comprenant un fût dans lequel les chariots du dispositif de préhension tel que décrit précédemment sont montés coulissants,
- une chaine de manutention comprenant une chaine de levage/pousseuse dont une partie est attachée aux moyens d'attache du chariot secondaire du dispositif de préhension tel que décrit précédemment, la chaine de levage/pousseuse faisant rouler le dispositif de préhension, en position horizontale, vers l'extérieur du fût du pont basculeur.

L'invention concerne également une pince comprenant :
- un corps d'axe longitudinal,
- des branches de préhension montées basculantes orthogonalement à l'axe longitudinal sur le corps et comprenant des évidements,
- une tige montée coulissante dans le corps selon l'axe longitudinal, la tige comprenant des pattes conformées en griffes qui s'étendent transversalement à l'axe et de forme complémentaires à celle des évidements, les griffes étant agencées pour être emboitées dans les évidements des branches de préhension, dans une position translatée de la tige, et ainsi bloquer ces dernières dans une position extrême d'ouverture ou de fermeture.

La tige de la pince selon l'invention a, du côté de l'extrémité libre des branches de préhension, une longueur suffisante pour détecter la présence d'un élément à prélever par contact direct, lorsque les griffes bloquent les branches dans la position extrême d'ouverture ou de fermeture.

Il va de soi qu'un type de pince est associé à un type d'éléments de combustibles à manutentionner.

Sous un aspect supplémentaire, l'invention concerne un procédé de manutention d'éléments combustibles, selon lequel, en cas de défaillance lors d'une opération de manutention d'exploitation:
- on attache une partie d'un dispositif de préhension d'éléments combustibles à des moyens mécaniques de manutention de secours,
- on désaccouple la partie du dispositif de préhension attachée aux moyens mécaniques de secours du reste du dispositif de préhension attaché aux moyens mécaniques de manutention d'exploitation à l'aide de moyens télé-opérés.

L'opération de manutention peut être soit un levage, soit un basculement à l'horizontale, soit une poussée horizontale.

L'actionnement des moyens télé-opérés réalise avantageusement un unique mouvement de traction-poussée séparant les parties du dispositif de préhension l'une de l'autre.

Ainsi, tel que mentionné ci-dessus, l'invention consiste à concevoir et réaliser un dispositif de préhension, une pince et un système de manutention associés qui permettent en :
1/ fonctionnement normal (c'est-à-dire sans défaillance ou panne) :
   - la manutention verticale et horizontale de nombreux types d'éléments combustibles,
   - la préhension de ces éléments combustibles,
   - le contrôle de présence d'éléments combustibles prélevés,
   - la sélection et la mise en place de différentes pinces de préhension en fonction de la famille de combustibles à prélever,
   - le contrôle électrique de la présence d'une pince,
   - le contrôle des efforts transitant dans la chaîne cinématique de manutention,
   - le contrôle de position des différents mouvements (présence de l'élément combustible, présence de la pince, et contrôle des deux positions extrêmes des doigts de pince à savoir pince fermée et pince ouverte).
2/ mode dégradé (c'est-à-dire en cas de survenance d'une panne ou défaillance) :
   A/ en position verticale
      - le désaccouplement de la partie du dispositif de préhension comprenant la pince et l'élément combustible prélevé, de la chaîne de levage d'exploitation,
      - la préhension par un autre moyen de levage de la partie de dispositif de préhension désaccouplée et comprenant la pince et l'élément combustible prélevé,
      - la libération de l'élément combustible prélevé de la partie du dispositif de préhension désaccouplée puis sa dépose dans un râtelier adapté,
   B/ en position horizontale :
      - le désaccouplement entre la partie du dispositif de préhension comprenant la pince et l'élément combustible prélevé et la chaîne de poussée d'exploitation,
      - la poussée de l'élément combustible dans l'emplacement de destination prévu à cet effet, par exemple dans une machine de découpe,
      - la libération de l'élément combustible,
   C/ quelle que soit la position :
      - la remise en configuration de l'ensemble du dispositif de préhension et du système de manutention.

### BRÈVE DESCRIPTION DES DESSINS

D'autres caractéristiques et avantages de l'invention ressortiront mieux à la lecture de la description détaillée faite en référence aux figures suivantes parmi lesquelles :
- la figure 1 est une vue générale d'un système de manutention selon l'invention utilisant un dispositif de préhension selon l'invention,
- la figure 1A est une vue schématique en coupe transversale au niveau du dispositif de préhension selon l'invention,
- la figure 2 est une vue schématique en coupe longitudinale d'un dispositif de préhension selon l'invention,
- la figure 2A est une vue schématique extraite de la figure 2 et montrant une pince selon l'invention permettant d'agripper les éléments combustibles,
- la figure 3A est une vue partielle en coupe longitudinale montrant une partie du dispositif de préhension selon une variante de l'invention,
- les figures 3B à 3D sont des vues de coupe du dispositif selon la figure 3A,
- la figure 3E est une vue de détail en perspective montrant une partie d'un dispositif de préhension de l'invention selon une variante de réalisation.

### EXPOSÉ DÉTAILLÉ DE MODES DE RÉALISATION PARTICULIERS

Le système S de manutention d'éléments combustibles selon l'invention comprend tout d'abord un dispositif de préhension P.

Ce dispositif de préhension P comprend un corps principal 1 et un corps secondaire 2 d'axe longitudinal (XX') munis chacun de moyens roulants 3, tels que des galets, et constituent ainsi des chariots.

Les dénominations chariot principal et chariot secondaire sont employées ici en référence aux éléments de combustible à agripper. Ainsi, le chariot principal 1, appelé aussi grappin, est celui qui supporte la pince 6 de préhension des éléments combustibles tandis que le chariot secondaire 2 est le chariot intermédiaire entre le chariot principal 1 et la partie avant de la chaîne pousseuse qui assure la manutention horizontale et verticale. Cette partie avant est également appelée nez de chaîne pousseuse.

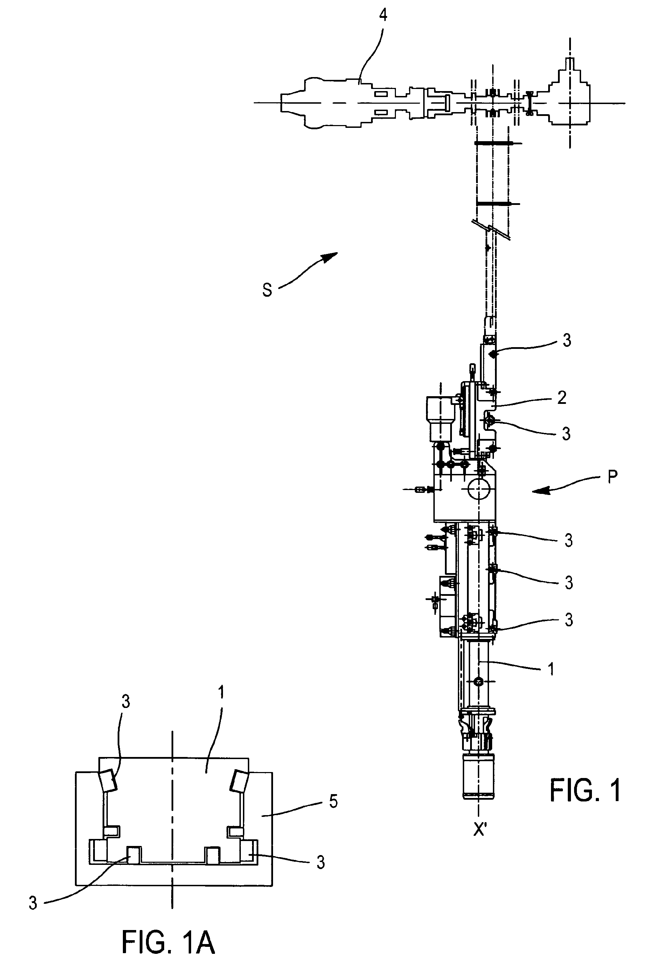

Dans le système de manutention S de l'invention S, le chariot secondaire 2 est attaché par ses moyens d'attache 20 à une chaine de levage et de poussée dont la montée est actionnée par un moteur 4 fixé à un pont basculeur non représenté (figure 1).

Le pont basculeur permet une bascule du dispositif de préhension P de la verticale à l'horizontale. La chaîne cinématique de manutention comprend la chaîne pousseuse actionnée par un ensemble de motorisation. Dans les dispositifs précédents selon l'état de l'art, la manutention n'étant que verticale, des systèmes à chaînes de manutention ou à câbles étaient utilisés.

Le dispositif de préhension P comprend tout d'abord un corps principal 1 roulant dans un fût 5 en forme de U du pont basculeur par l'intermédiaire des moyens roulants 3.

Ce fût 5 du pont basculeur permet d'une part, le guidage du dispositif de préhension P par appui de celui-ci à la fois en position horizontale et verticale et d'autre part, le glissement des éléments combustibles prélevés, lors de leur transfert horizontal vers une machine de découpe adaptée (figure 1A).

Ce corps principal 1 est accouplé avec une pince 6 de préhension d'éléments combustibles non représentés. En position de levage, la pince 6 ainsi accouplée est en partie basse du corps 1.

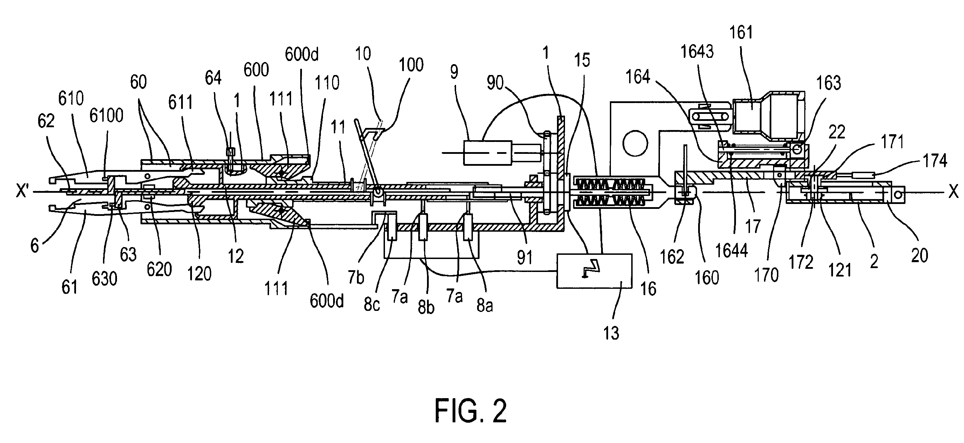

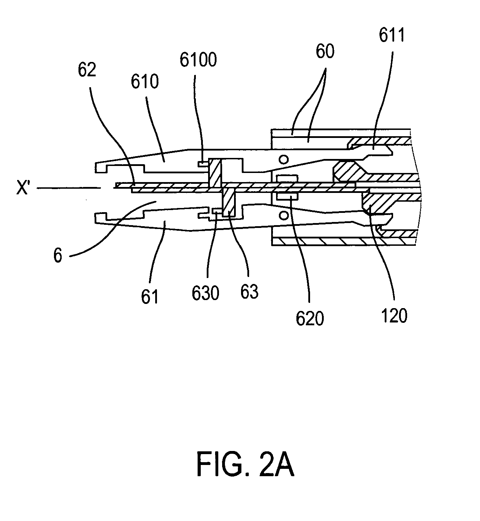

Une pince 6 qui convient dans le cadre de l'invention, est représentée en figure 2A. Elle comprend les éléments suivants:
1/ un bloc tubulaire 60 dont la forme intérieure est adaptée à un accouplement avec le corps principal 1,
2/ des branches de préhension 61 d'éléments combustibles qui sont montées basculantes orthogonalement à l'axe XX' et qui comprennent chacune une partie formant préhenseur 610 dont la forme est adaptée au type d'élément combustible à manutentionner et une partie 611 dont la forme est adaptée pour assurer les différents mouvements de basculement (rapprochement ou écartement des branches 61) comme décrit ci-après,
3/ une tige de détection 62 de présence des éléments combustibles montée en translation dans des guides 620 solidaires du bloc tubulaire 60,
4/ un verrou mécanique 63 solidaire de la tige de détection 62 interdit tout mouvement de manoeuvre des préhenseurs 610 lorsque, d'une part l'élément combustible n'est pas détecté (manoeuvre de préhension) et d'autre part lors de la manutention d'élément combustible (ouverture intempestive : retombée de la tige lors du rattrapage des jeux lors de l'opération de levage). Le verrou mécanique 63 est dans le mode de réalisation illustré (figures 2 et 2A) constitué par des griffes 630 solidaires transversalement à la tige 63 qui viennent s'emboiter dans des évidements 6100 de forme complémentaire pratiqués à l'intérieur des préhenseurs 610 dans une position translatée de la tige 62. Autrement dit, la pince 6 ainsi définie comporte en quelque sorte un auto verrouillage de ses branches 61 qui est uniquement mécanique par emboitement des griffes 630 à l'intérieur des branches en position extrême d'ouverture ou de fermeture qui correspond à la position de préhension d'éléments combustibles.

Dans le mode de réalisation illustré en figure 2, il est en outre prévu un système de verrouillage de secours 64 qui permet, une fois la pince 6 accouplée avec le corps principal 1 de verrouiller ledit accouplement. Tel que représenté, ce système est constitué par un ergot 64 solidaire de la pince 6 qui est agencé orthogonalement à l'axe longitudinal XX' du corps principal 1 et qui peut être actionné par des moyens télé-opérés.

Le corps principal 1 comprend tout d'abord un système de commande permettant l'accouplement avec la pince 6. La manoeuvre de ce système de commande s'effectue manuellement par des moyens télé-opérés. Ce système de commande comprend un levier 10 qui entraîne en translation un arbre creux cylindrique 11 lequel par un système de reliefs formant came 110 engendre la rotation d'un certain nombre de doigts 111. Le levier d'accouplement 10 peut être bloqué par un auto-verrouillage 100 solidaire du corps principal 1. L'arbre cylindrique creux 11 est emmanché autour d'un arbre également creux 12 de commande des branches de préhension 61 des éléments combustibles. Cet arbre creux 12 a une extrémité 120 dans laquelle est emmanchée la tige 62 du système de détection de la présence des éléments combustibles.

La position de préhension de la pince 6 correspond dans le mode de réalisation illustré à la figure 2A à un rapprochement mutuel des branches de pince 61 dans une position extrême de fermeture bloquée en translation par les doigts 111. Cette position est contrôlée électriquement au moyen d'un drapeau mécanique 7a constitué par une protubérance qui s'étend transversalement à l'axe et qui est positionné devant un détecteur électrique de position 8b. Un autre détecteur électrique de position 8a détecte la position extrême d'ouverture lorsque le drapeau 7a est positionné devant.

Le corps 1 comprend également un système de commande de la pince 6 de préhension des éléments combustibles. Ce système comprend une motorisation électrique 9 qui, au moyen d'un engrenage 90 et d'une réduction de type vis-écrou 91, entraîne en translation une extrémité de l'arbre creux 12. L'autre extrémité de l'arbre 12 est élargie selon une forme 120 permettant la transmission du mouvement par appui sur la partie 611 de la pince 6.

Les positions caractéristiques du mouvement ainsi que la présence du corps de pince sont contrôlées électriquement au moyen des drapeaux mécaniques 7a, 7b se positionnant respectivement devant les détecteurs de position 8a, 8b et 8c. Plus exactement, la présence d'un élément combustible agrippé est détectée par un drapeau 7a et deux détecteurs électriques 8a, 8b. La présence de la pince 6 est détectée par un drapeau 7b et un détecteur 8c, la position de la pince 6 et d'un élément combustible est détectée par un drapeau 7a et deux détecteurs 8a, 8b. Le moteur 9 avec l'engrenage 90 et le système vis-écrou 91 est démontable manuellement par des moyens télé-opérés. Il est relié électriquement par une prise télé-opérable à un boîtier électrique 13. Ce boitier électrique 13 est supporté par le dispositif d'alimentation électrique non représenté du moteur 9. L'ensemble des détecteurs de position 8, 8a, 8b est contenu dans un boitier 14 relié électriquement au boitier 13 et également supporté par le dispositif d'alimentation électrique. Le boitier électrique 13 est un boitier de regroupement des différentes liaisons électriques arrivant sur le grappin 1,6 et est relié électriquement au fût du pont basculeur via une chaîne porte-câble.

Le corps principal 1 comprend également un peson électronique 15 reliant la partie préhension 6, 7, 8, 9, 90, 91, 10, 11, 110, 111, 12, 120 du corps 1 permanent à un système de liaison intermédiaire 16. Ce peson 15 permet de contrôler les efforts exercés dans les deux sens traction et compression, respectivement lors d'une opération de levage et lors d'une opération de poussée du dispositif de préhension. Ce peson 15 est relié électriquement par une prise au boîtier 13 supporté par le dispositif d'alimentation électrique. Dans le mode de réalisation illustré, le peson 15 peut être démonté par des moyens télé-opérés tout comme la prise branchée.

Le système de liaison intermédiaire 16 comprenant une attache 160 le reliant à un chariot de tête 17 et une tulipe de préhension 161 dont la forme est adaptée pour coopérer avec des moyens de levage équipant une cellule d'alimentation dans laquelle des éléments de combustible à prélever sont immergés dans un bassin. L'attache 160 est conformée en un U relié au peson 15.

L'attache 160 est attachée avec le chariot de tête 17 au moyen d'une goupille 162 emboitée. Cette goupille 162 est adaptée pour être enlevée par des moyens télé-opérés.

La tulipe de préhension 161 est utilisée uniquement en cas de défaillance de la chaîne d'exploitation.

La manoeuvre de roulement du dispositif P dans le fût 5 du pont basculeur sera actionnée par l'utilisation de la tulipe 161 (en manutention verticale).

Le dispositif de préhension comprend également un chariot secondaire 2 muni de moyens roulants 3 et accouplé avec le chariot de tête 17 du corps principal 1.

Ce chariot secondaire 2 comprend des moyens d'attache 20 qui sont attachées à la chaîne pousseuse du système de manutention.

L'accouplement entre chariots 1 et 2 est également réalisé par des moyens de transmission d'efforts pour transmettre les efforts exercés sur les moyens d'attache 20 lors d'un levage du dispositif et lors d'une poussée horizontale sur le dispositif.

Tels qu'illustrés, les moyens de transmission d'effort sont constitués par un ensemble de deux clavettes 170, 171.

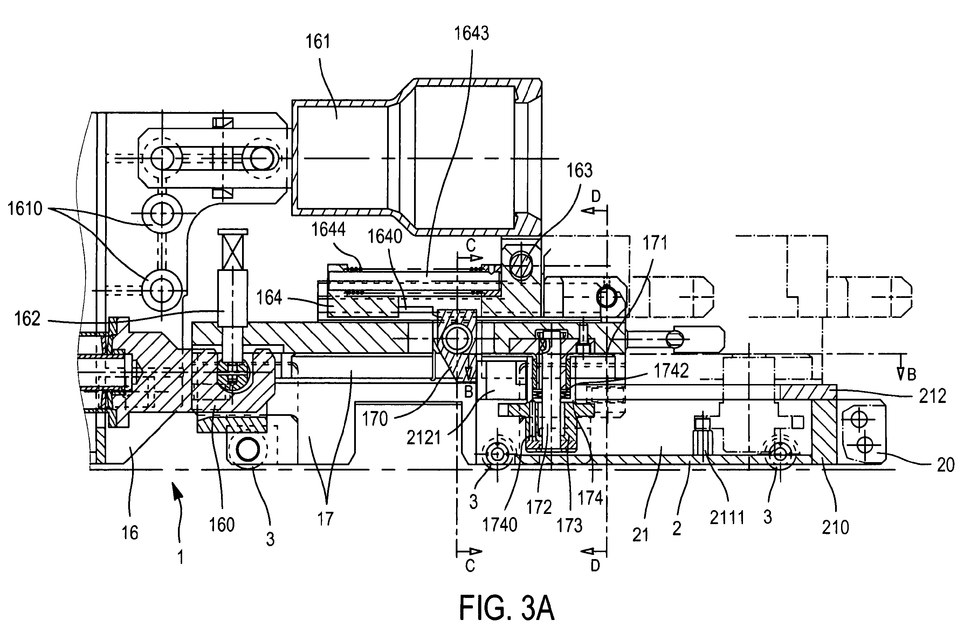

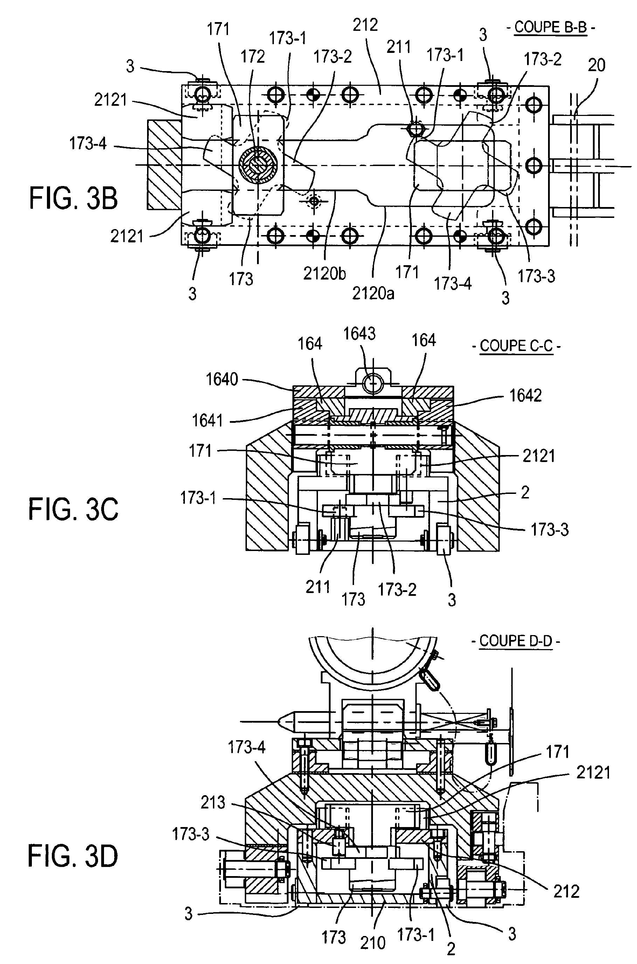

La première clavette 170 est montée basculante transversalement à l'axe XX'. Une goupille 163 solidarise la tulipe de préhension 161 à la socle 164 qui coulisse sur le chariot 17 et entre les pièces 1640, 1641 et 1642 dont la socle 1640 qui supporte une axe 1643 (figures 3A et 3C). Un ressort 1644 maintient l'ensemble constitué par la tulipe 161 et la goupille 163 en position extrême de butée (figures 3A et 3C).

La deuxième clavette 171 conformée en T est montée pivotante sur un axe pivot 172 fixé au chariot de tête 17 orthogonalement à l'axe XX'.

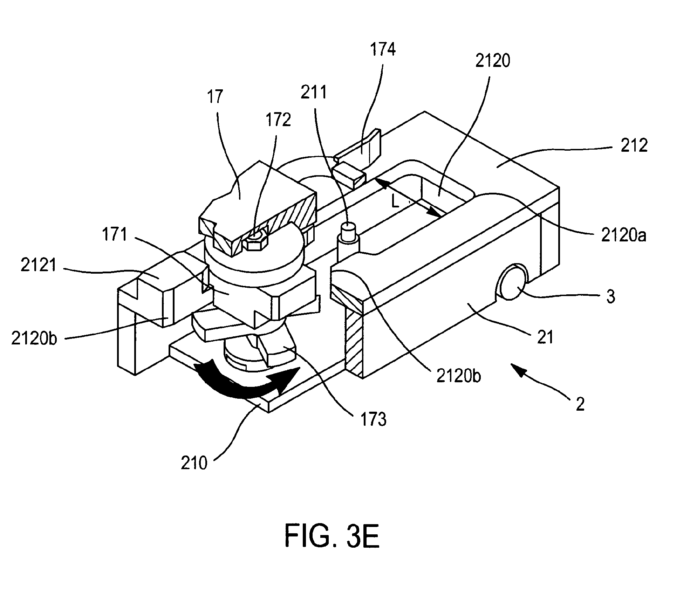

Ainsi, en fonctionnement normal du système de manutention d'éléments combustibles, les clavettes 170 et 171 sont en appui contre une partie avant du chariot secondaire 2 constitué par des plots 2121 tel que :
- lors d'un levage, la clavette 171 non pivotée est en appui contre les plots 2121 du chariot secondaire 2 (voir représentation en traits pleins sur la figure 3E),
- lors d'une poussée, le chariot secondaire 2 est en appui contre la clavette 170 non basculée (figure 3A).

Un système de bras de leviers 173, détaillé par la suite, est également monté pivotant sur l'axe pivot 172 (figures 3A à 3E). Ce système de bras de leviers 173, agencé en dessous de la deuxième clavette 171 est verrouillé à celle-ci en deux positions angulaires par l'intermédiaire d'un système de verrou 174 décrit par la suite. Ainsi, le système de bras de leviers 173 et la deuxième clavette 171 sont solidaires en rotation dans ces deux positions angulaires par le verrou 174, mais libre en rotation l'une de l'autre entre ces deux positions angulaires.

Le chariot secondaire 2 comprend un bâti 21 de section transversale en forme de U avec une base 210. Sur cette base 210 est fixé un pion 211. La base 210 est fermée au dessus par un capot 212 (figures 3B et 3E).

Ce capot 212 comporte tout d'abord une lumière 2120, agencée pour bloquer verticalement le système de bras de leviers 173 à l'intérieur du bâti 21 lorsque les chariots de tête 17 et secondaire 2 sont accouplés entre eux (figures 3B et 3E).

La lumière 2120 a une première portion 2120a fermée du côté des moyens d'attache 20 et de largeur L supérieure au pied du T de la clavette 171 et une deuxième portion 2120b en continuité de la première 2120a (figures 3B et 3E).

Le capot 212 comporte également des plots 2121 formant saillies, agencés de part et d'autre de la portion ouverte 2120b de la lumière 2120. Ces plots constituent la partie avant du chariot secondaire 2 sur laquelle les clavettes 170 et 171 prennent appui pour transmettre les efforts entre les chariots de tête 17 et secondaire 2 accouplés entre eux.

Ainsi, comme décrit ci-dessous, les formes du chariot 2 et de la clavette pivotante 171 sont conçues pour permettre l'accouplement et le désaccouplement d'une partie (chariot principal 1) du dispositif de préhension P de la chaîne pousseuse (à laquelle reste attaché le chariot secondaire 2) dans des cas d'incident ou pour des opérations de maintenance, et ce en utilisant uniquement les moyens télé-opérés et de levage de la cellule environnante.

En outre, pour certaines opérations de maintenance sur la chaîne cinématique de levage du système de manutention S, il est prévu de munir le bras de liaison de la tulipe 161 de fourreaux 1610 qui permettent le brochage du dispositif de préhension P sur le fût 5 du pont basculeur.

Les cas de défaillance de la chaine de manutention S subis par le dispositif de préhension P ainsi que leurs solutions pour y remédier conformément au mode de réalisation illustré sont détaillés ci-après :

### Blocage de la chaîne de levage en position verticale :

Les opérations de dépannage sont les suivantes :
a/ préhension du dispositif de préhension P et sa charge (éléments de combustible agrippés par la pince 6) au niveau de la tulipe 161 par le moyen de manutention de la cellule dans laquelle les éléments combustibles sont présents,
b/ levage: ce mouvement entraîne le socle 164 en comprimant le ressort 1644 et débloque ainsi la clavette basculante 170. Cela génère un mouvement relatif entre le chariot de tête 17 et le chariot secondaire 2 ; la clavette 171 est alors pivotée de sa position angulaire d'appui contre les plots 2121 (voir traits pleins de la figure 3B) à une autre dans laquelle elle peut coulisser dans la rainure 2120a mais ne peut prendre appui sur les plots 2121 (voir traits mixtes de la figure 3B);
c/ descente : ce mouvement ne fait pas pivoter la clavette 171. En effet, le pied du T de la clavette 171 interdit la rotation puisque guidé dans la portion 2120b de la lumière 2120.
d/ après descente selon d/, le dispositif P et sa charge (éléments de combustible agrippés par la pince 6) sont libérés de la chaîne pousseuse et peuvent être transférés au moyen de l'appareil de levage de la cellule.

Pour le transfert, on peut faire pivoter la tulipe 161 par retrait de la goupille 163. La rotation de la tulipe 161 se fait alors autour d'un axe solidaire du système de liaison intermédiaire 16 après translation vers le haut de la tulipe 161. La rotation de la tulipe 161 permet au grappin 1, 16, 6 de prendre sa position d'équilibre une fois retirée du fût du pont basculeur.

Une fois le dispositif P et sa charge déposés en situation sûre, la charge (éléments de combustible et leur support agrippé) peut être libérée du dispositif de préhension et de la pince 6 par les opérations suivantes :
- alimentation électrique du moteur 9 de préhension de la charge si ce dernier est toujours opérationnel,
- ou déverrouillage de la pince 6 du corps principal 1 (actionnement du levier d'accouplement 10), le levage du dispositif génère un mouvement relatif entre le corps 1 et la pince 6, lequel actionne l'écartement des doigts de préhension 610 de la charge et, de ce fait, libère la charge, la pince 6 étant ensuite entraînée et dégagée au moyen du verrou de sécurité 64.

### Blocage de la chaîne de levage en position horizontale:

Deux cas peuvent se produire :
- la situation permet un retour en position verticale : le dépannage s'effectue comme ci-dessus après basculement par le pont basculeur,
- le retour en position verticale n'est pas possible :
   *reconduction des opérations décrites au paragraphe précédent en substituant le moyen de levage de la cellule par un moyen de poussée/traction. Après déconnexion du dispositif de préhension P de la chaîne, on réalise alors une poussée du dispositif P et sa charge (éléments de combustible agrippés par la pince 6) dans une position de sécurité,
   *désaccouplement de la charge (éléments combustibles) de la pince 6 selon les principes décrits précédemment,
   *retrait du dispositif P avec sa pince 6 pour réparation.

On va maintenant décrire plus en détail les étapes b/ et c/ qui permettent le désaccouplement entre chariot principal 1 et chariot secondaire 2.

Tout d'abord, on précise que le système de bras de leviers 173 est, dans le mode de réalisation illustré (figures 3A à 3E), une pièce monobloc constituée de deux paires de deux bras 173-1, 173-3 et 173-3, 173-4. Chaque paire est agencée sur des niveaux différents le long de l'axe pivotant 172, les deux bras 173-1, 173-3 et 173-2, 173-4 d'une même paire sont sensiblement diamétralement opposés par rapport à l'axe de pivot 172, tandis que deux bras 173-1, 173-2 de deux paires différentes forment un angle de l'ordre de 90°. Ainsi, en vue selon l'axe 172, le système de bras de leviers 173 est conformé sensiblement en croix droite (voir figure 3B).

Outre le pion 211 fixé sur la base 210, il est prévu dans le chariot secondaire selon l'invention un autre pion 213 fixé en dessous du capot 212 dans la zone de la lumière rétrécie 2120b.

La translation relative du chariot de tête 17 vers le chariot secondaire 2 (correspondant à un mouvement de montée du chariot 2 bloqué ou de descente du chariot 17 bloqué) amène tout d'abord le socle 164 à faire basculer la clavette 170. Puis, cette translation amène l'un des bras de levier 173-1 en contact avec le pion 211 fixé sur la base 210 qui fait alors tourner la clavette 171 solidaire en rotation, d'un quart de tour : la clavette 171 est alors positionnée de telle façon que sa longueur soit parallèle au mouvement de translation (voir clavette 171 en traits mixtes sur la figure 3B). Ce positionnement est autorisé car la clavette 171 est libre de tourner dans la lumière élargie 2120a. Le désaccouplement du chariot secondaire 2 du chariot principal 1 est ainsi autorisé.

Puis, par translation relative du chariot de tête 17 en l'écartant du chariot secondaire 2, le pion 213 entre en contact avec un autre des bras de levier 173-2 situé à un niveau différent de celui du bras de levier 173-1, ce qui fait pivoter à nouveau d'un quart de tour le système de bras 173 mais pas la clavette 171 bloquée en rotation. En effet, dans la zone de la lumière 2120b le pied de la clavette 171 est bloqué en rotation.

Cette dernière rotation d'un quart de tour repositionne en quelque sorte le système de bras de levier 173 dans une position angulaire de 180° de sa position initiale. On peut ainsi réaliser un ré-accouplement entre chariot secondaire 2 et principal 1 par remontage de la liaison entre la clavette 171 à nouveau en appui contre les plots 2121, selon un unique mouvement de poussée/traction exercé sur le chariot principal 1.

Ainsi, en résumé, dans la réalisation illustrée aux figures 3A à 3E, les opérations sont réalisées comme suit :
1/ Opération de désaccouplement : un mouvement de traction vers l'arrière du chariot secondaire 2 bloqué en translation, amène le bras 173-1 en appui contre le pion 211, ce qui fait pivoter la clavette 171 dans sa position angulaire de dégagement (voir la représentation en traits mixtes en figure 3B). Puis, un mouvement de poussée vers l'avant amène le bras 173-4, qui est sur un niveau différent du bras 173-1, en appui contre le pion 213, ce qui fait pivoter l'ensemble du système de bras de levier 173 sans pivotement de la clavette 171, selon une deuxième rotation, sur une course identique dans le même sens que la première rotation provoquée le pion 211. Le non pivotement de la clavette 171 lors de cette deuxième rotation est possible grâce au système de verrou 174 qui permet la rotation du système de bras de levier 173 par rapport à la clavette 171 lorsque celle-ci est maintenue bloquée en rotation (dans la lumière 2120b).
2/ Opération de ré-accouplement : un mouvement de poussée du chariot de tête 17 ou de l'ensemble du chariot principal 1 en introduisant la clavette 171 dans la lumière 2120b dans le chariot secondaire amène l'un des bras 173-1, 173-3 à nouveau en contact avec le pion 211 et vient positionner ainsi la clavette 171 solidaire en rotation à nouveau dans sa position de blocage par les plots 2121. Dans le mode de réalisation illustré à la figure 3B, le bras en contact avec le pion 211 étant le bras 173-1 lors du désaccouplement, le bras en contact avec le pion 211 est l'autre bras 173-3 lors du ré-accouplement.

Dans le mode de réalisation illustré en figure 3A, le verrou 174 est constitué par un système de poussoir à billes/empreintes agencé entre la clavette pivotante 171 et le système de bras de leviers 173. Plus précisément, des billes 1740 sont montées dans la pièce monobloc 173 et sont bloquées en quatre positions angulaires à 90° l'une de l'autre, dans des empreintes 1741 de forme complémentaire pratiquées dans la partie basse de la clavette 171. Un ressort non représenté (intégré dans les billes 1740) sert à maintenir les billes 1740 dans leurs empreintes 1741, lesquelles obligent l'application d'un effort minimum pour faire tourner le système 173 sans faire tourner la clavette 171. Un autre ressort 1742 sert à maintenir le système de bras 173 dans les crans.

Dans le mode de réalisation illustré en figure 2A, la pince 6 est une pince dans laquelle les branches 610 sont rapprochées l'une de l'autre pour prélever les éléments combustibles. Il va de soi qu'une pince dans laquelle les branches sont écartées l'une de l'autre pour prélever la tête d'éléments combustibles convient dans le cadre de l'invention, à la condition de pouvoir être accouplée avec le corps principal.

La pince 6 selon l'invention, bien que représentée dans le contexte de l'invention pour agripper des éléments combustibles peut tout à fait être employée dans d'autres d'applications dans lesquelles on cherche à verrouiller les branches de pince sur l'élément agrippé par celle-ci.

## Revendications

1. Dispositif de préhension (P) d'éléments combustibles nucléaire comprenant :
- un chariot principal (1) d'axe longitudinal (XX'),
- une pince (6) accouplée au chariot principal et adaptée pour agripper la tête des éléments combustibles,
- un chariot secondaire (2) d'axe longitudinal (XX') comprenant des moyens d'attache (20) à une chaîne de levage/pousseuse, dispositif dans lequel les chariots principal et secondaire sont accouplés entre eux par des moyens (170, 2 ; 171, 2121) pour transmettre les efforts exercés sur les moyens d'attache (20) lors d'un levage du dispositif et lors d'une poussée horizontale sur le dispositif, les moyens de transmission d'effort étant agencés en liaison démontable entre les chariots principal et secondaire, dispositif dans lequel le désaccouplement entre le chariot principal et le chariot secondaire est réalisé, lorsque le chariot secondaire est bloqué au niveau de ses attaches par démontage de la liaison des moyens de transmission d'effort avec les chariots, le démontage étant réalisé uniquement par l'application d'une force de traction et d'une force de poussée exercées sur le chariot principal (1), la traction s'effectuant vers le chariot secondaire (2).

2. Dispositif de préhension (P) selon la revendication 1, dans lequel le ré-accouplement entre le chariot principal (1) et le chariot secondaire (2) est réalisé, lorsque le chariot secondaire est bloqué au niveau de ses attaches (20), par remontage de la liaison des moyens de transmission d'effort avec les chariots, le remontage de la liaison s'effectuant uniquement par l'application d'une force de traction et d'une force de poussée exercées sur le chariot principal (1), la poussée s'effectuant vers le chariot secondaire (2).

3. Dispositif de préhension (P) selon la revendication 1 ou 2, dans lequel les moyens de transmission d'efforts (170, 2 ; 171, 2121), en liaison démontable entre les chariots principal et secondaire, comprennent :
- une première clavette (170), montée sur le chariot principal (1) en étant basculante transversalement à l'axe longitudinal (XX') et en butée contre le chariot secondaire (2) pour permettre la transmission des efforts exercés sur les moyens d'attache lors de la poussée horizontale,
- une deuxième clavette (171), montée sur le chariot principal pivotante orthogonalement à l'axe longitudinal (XX') et en butée (2121) contre le chariot secondaire pour permettre la transmission des efforts exercés sur les moyens d'attache (20) lors du levage; dispositif dans lequel la traction exercée sur le chariot principal permet le basculement de la première clavette (170), le mouvement relatif du chariot principal vers le chariot secondaire, puis le pivotement de la deuxième clavette, la première clavette basculée et la deuxième clavette pivotée restant chacune dans une position libre de toute butée contre le chariot secondaire.

4. Dispositif de préhension (P) selon l'une quelconque des revendications précédentes, dans lequel le chariot principal comprend deux parties rigides (9,10,11,12 ; 17) reliées entre elles par un système de liaison intermédiaire (16), dont :
- une (9, 10, 11, 12) est accouplée avec la pince (6) et, comprend un peson électronique (15) permettant de contrôler électriquement des efforts de traction ou de compression exercés sur ladite partie rigide (9,10,11,12) supportant la pince (6) ;
- l'autre (17) comprend un chariot dit chariot de tête (17) accouplé avec le chariot secondaire (2) et une tulipe de préhension (161) par laquelle la traction/poussée de désaccouplement entre le chariot de tête (17) et le chariot secondaire (2) est réalisé.

5. Dispositif de préhension (P) selon l'une quelconque des revendications précédentes, dans lequel le chariot principal comprend :
- un moteur électrique (9),
- un arbre creux (11, 12) monté en translation avec l'une de ses extrémités en engrènement de type vis/écrou (91) avec le moteur électrique et avec l'autre de ses extrémités (120) en appui contre une partie (611) des branches (61) de préhension de la pince (6) avec, l'actionnement du moteur électrique (9) provoquant la translation de l'arbre (12) dans un sens et simultanément le rapprochement ou l'écartement des branches de préhension (61) de la pince (6) par basculement orthogonalement à l'axe (XX').

6. Dispositif de préhension selon la revendication 5, comprenant un levier d'accouplement (10) fixé au chariot principal (1) et agencé pour constituer un bras de levier pour faire translater l'arbre (11, 12) et le désaccoupler de la pince, le bras de levier étant adapté pour être manipulé par des moyens télé-opérés.

7. Dispositif de préhension selon la revendication 5 ou 6, dans lequel :
- la pince (6) comprend un corps (60) sur lequel sont montées basculantes les branches de préhension (61) et sur lequel est montée coulissante une tige (62) selon l'axe (XX') entre les branches (61),
- l'arbre creux (12) comprend intérieurement une tige (120) qui y est fixée, la tige (120) de l'arbre creux étant en appui contre la tige (62) de pince, la longueur de la tige de pince étant telle que, dans l'une des positions extrêmes rapprochée ou écartée des branches de pinces correspondant à la position d'agrippement de la tête des éléments de combustible, il y ait un contact direct entre cette dernière et la tige de pince.

8. Dispositif de préhension (P) selon la revendication 7, dans lequel :
- la tige fixée à l'intérieur de l'arbre creux (12) comprend une protubérance (7a) qui s'étend transversalement à l'axe (XX') en formant un drapeau,
- le chariot principal (1) comprend un premier détecteur de position (8a) agencé de sorte à être en regard du drapeau (7a) pour détecter électriquement le contact direct entre la tête des éléments de combustible et la tige de pince.

9. Dispositif de préhension (P) selon l'une des revendications 6 à 8, dans lequel
- le chariot principal comprend des doigts (111) montés basculants orthogonalement à l'axe longitudinal (XX') ;
- le corps de pince (6) comprend une paroi (600) avec décrochements (600d) ;
- l'arbre (12) comprend des reliefs (110) fixés à sa périphérie ; l'accouplement entre la pince (6) et l'arbre (12) étant réalisé par le basculement des doigts (111) par les reliefs (110) et par l'appui des doigts (111) basculés contre les décrochements (600d) du corps (60) de pince (6).

10. Dispositif de préhension (P) selon la revendication 9, comprenant, en tant que moyens pour verrouiller l'accouplement entre le corps principal (1) et la pince (6), une goupille (64) insérée dans la paroi (600) du corps (60) de pince (6) transversalement à l'axe longitudinal (XX') du corps principal et permettant le blocage en translation de l'un (1) par rapport l'autre (6), la goupille (64) étant adaptée pour être enlevée par des moyens télé-opérés.

11. Dispositif de préhension (P) selon la revendication 9 ou 10, dans lequel :
- l'arbre creux (12) comprend une protubérance (7a) qui s'étend transversalement à l'axe (XX') en formant un drapeau,
- le chariot principal (1) comprend un premier et un deuxième détecteur de position (8a, 8b) agencés chacun de sorte à être en regard du drapeau (7a) dans une position translatée donnée de l'arbre creux (12) pour détecter électriquement une position translatée donnée des reliefs (110) et donc le basculement ou non des doigts (111).

12. Dispositif de préhension (P) selon la revendication 11, dans lequel :
- le corps (60) de pince (6) comprend une protubérance qui s'étend transversalement à l'axe (XX') en formant un drapeau (7b),
- le chariot principal (1) comprend un troisième détecteur de position (8c) agencé de sorte à être, une fois la pince (6) accouplée avec le chariot principal, en regard du drapeau (7b) qui détecte ainsi électriquement la présence de la pince (6).

13. Système de manutention (S) d'éléments combustibles comprenant :
- un dispositif de préhension (P) selon l'une quelconque des revendications précédentes,
- un pont basculeur comprenant un fût (5) dans lequel les chariots (1,17 ; 2) du dispositif de préhension (P) sont montés,
- une chaine de manutention comprenant une chaine de levage/pousseuse dont une partie est attachée aux moyens d'attache (20) du chariot secondaire (2) du dispositif de préhension (P), la chaine de levage/pousseuse faisant rouler le dispositif de préhension (P), en position horizontale, vers l'extérieur du fût du pont basculeur.

14. Procédé de manutention d'éléments combustibles nucléaire, selon lequel, en cas de défaillance lors d'une opération de manutention d'exploitation:
- on attache une partie (1, 16, 17) d'un dispositif de préhension (P) d'éléments combustibles à des moyens mécaniques de manutention de secours (S).
- on désaccouple la partie (1, 16, 17) du dispositif de préhension (P) attachée aux moyens mécaniques de secours du reste (2, 20) du dispositif de préhension (P) attaché aux moyens mécaniques de manutention d'exploitation à l'aide de moyens télé-opérés.

15. Procédé de manutention selon la revendication 14, selon lequel l'opération de manutention est soit un levage, soit un basculement à l'horizontale, soit une poussée horizontale.

16. Procédé selon la revendication 15 ou 14, selon lequel l'actionnement des moyens télé-opérés réalise un unique mouvement de traction-poussée séparant les parties du dispositif de préhension (1,16, 17 ; 2) l'une (1, 16, 17) de l'autre (2).

## Patentansprüche

1. Greifvorrichtung (P) für Kernbrennelemente, die Folgendes aufweist:
- einen Hauptwagen (1) mit Längsachse (XX'),
- eine Zange (6), die mit dem Hauptwagen gekuppelt und angepasst ist, um den Kopf des Brennelements zu erfassen,
- einen Nebenwagen (2) mit Längsachse (XX'), der Mittel (20) zur Befestigung an einer Hub-/Schubkette aufweist, Vorrichtung, bei der der Hauptwagen und der Nebenwagen untereinander durch Mittel (170, 2; 171, 2121) gekuppelt sind, um die Kräfte zu übertragen, die auf die Befestigungsmittel (20) bei einem Heben der Vorrichtung und bei einem horizontalen Schub auf der Vorrichtung ausgeübt werden, wobei die Kraftübertragungsmittel in demontierbarer Verbindung zwischen dem Hauptwagen und dem Nebenwagen eingerichtet sind, Vorrichtung, bei der das Abkuppeln zwischen dem Hauptwagen und dem Nebenwagen erfolgt, wenn der Nebenwagen auf dem Niveau seiner Befestigungen durch Demontage der Verbindung der Kraftübertragungsmittel mit den Wagen blockiert ist, wobei die Demontage ausschließlich durch Anlegen einer Zugkraft und einer Schubkraft ausgeführt wird, die auf dem Hauptwagen (1) ausgeübt werden, wobei der Zug zu dem Nebenwagen (2) erfolgt.

2. Greifvorrichtung (P) nach Anspruch 1, bei der das Wiederankuppeln zwischen dem Hauptwagen (1) und dem Nebenwagen (2) ausgeführt wird, wenn der Nebenwagen auf dem Niveau seiner Befestigungen (20) blockiert ist, durch Rückmontage der Verbindung der Kraftübertragungsmittel mit den Wagen, wobei die Rückmontage der Verbindung ausschließlich durch das Anlegen einer Zugkraft und einer Schubkraft erfolgt, die auf den Hauptwagen (1) ausgeübt werden, wobei der Schub zu dem Nebenwagen (2) erfolgt.

3. Vorrichtung (P) nach Anspruch 1 oder 2, bei der die Kraftübertragungsmittel (170, 2; 171, 2121) in demontierbarer Verbindung zwischen dem Hauptwagen und dem Nebenwagen Folgendes aufweisen:
- einen ersten Keil (170), der auf den Hauptwagen (1) montiert ist, indem er quer zu der Längsachse (XX') kippend und im Anschlag gegen den Nebenwagen (2) ist, um die Übertragung der Kräfte, die auf die Befestigungsmittel bei dem horizontalen Schub ausgeübt werden, zu erlauben,
- einen zweiten Keil (171), der auf den Hauptwagen montiert ist, der orthogonal zu der Längsachse (XX') schwenkt und im Anschlag (2121) gegen den Nebenwagen ist, um die Übertragung der Kräfte zu erlauben, die auf die Befestigungsmittel (20) bei dem Hub ausgeübt werden, Vorrichtung bei der der Zug, der auf dem Hauptwagen ausgeübt wird, das Kippen des ersten Keils (170), die relative Bewegung des Hauptwagens zu dem Nebenwagen, dann das Schwenken des zweiten Keils erlaubt, wobei der erste gekippte Keil und der zweite geschwenkte Keil jeweils in einer Position bleiben, die frei von jedem Anschlagen gegen den Nebenwagen ist.

4. Greifvorrichtung (P) nach einem der vorhergehenden Ansprüche, bei der der Hauptwagen zwei steife Teile (9, 10, 11, 12; 17) aufweist, die untereinander durch ein Zwischenverbindungssystem (16) verbunden sind, von welchen:
- einer (9, 10, 11, 12) mit der Zange (6) gekuppelt ist und eine elektronische Kraftmessdose (15) aufweist, die es erlaubt, die Zugkräfte oder Druckkräfte, die auf den starren Teil (9, 10, 11, 12) ausgeübt werden, der die Zange (6) trägt, elektrisch zu steuern,
- der andere (17) einen so genannten Kopfwagen (17) aufweist, der mit dem Nebenwagen (2) gekuppelt ist, und eine Greiftulpe (161), durch welche der Abkuppelzug/-schub zwischen dem Kopfwagen (17) und dem Nebenwagen (2) ausgeführt wird.

5. Greifvorrichtung (P) nach einem der vorhergehenden Ansprüche, bei der der Hauptwagen Folgendes aufweist:
- einen Elektromotor (9),
- eine Hohlwelle (11, 12), die in Verschiebung mit einem ihrer Enden, im Eingriff des Typs Schraube/Mutter (91) mit dem Elektromotor montiert ist und, die mit dem anderen ihrer Enden (120) in Auflage gegen einen Teil (611) der Greifschenkel (61) der Zange (6) montiert ist, wobei die Betätigung des Elektromotors (9) eine Verschiebung der Welle (12) in eine Richtung und gleichzeitig die Annäherung oder das Abspreizen der Greifschenkel (61) der Zange (6) durch Kippen orthogonal zu der Achse (XX') bewirkt.

6. Greifvorrichtung nach Anspruch 5, die einen Kupplungshebel (10) aufweist, der an dem Hauptwagen (1) befestigt und eingerichtet ist, um einen Hebelarm zu bilden, um die Welle (11, 12) verschieben zu lassen und sie von der Zange abzukuppeln, wobei der Hebelarm angepasst ist, um von fernbedienten Mitteln betätigt zu werden.

7. Greifvorrichtung nach Anspruch 5 oder 6, bei der:
- die Zange (6) einen Körper (60) aufweist, auf den die Greifschenkel (61) kippend montiert sind, und auf den gleitend ein Schaft (62) entlang der Achse (XX') zwischen den Schenkeln (61) montiert ist,
- die Hohlwelle (12) innen einen Schaft (120), der dort befestigt ist, aufweist, wobei der Schaft (120) der Hohlwelle in Auflage gegen den Schaft (62) der Zange ist, wobei die Länge des Zangenschafts derart ist, dass in einer der angenäherten oder abgespreizten Endpositionen der Zangenschenkel, die der Greifposition des Kopfs der Brennelemente entspricht, ein direkter Kontakt zwischen diesem Letzteren und dem Zangenschaft besteht.

8. Greifvorrichtung (P) nach Anspruch 7, bei der:
- der Schaft, der im Inneren der Hohlwelle (12) befestigt ist, einen Vorsprung (7a) aufweist, der sich quer zu der Achse (XX') unter Bilden eines Tasters erstreckt,
- der Hauptwagen (1) einen ersten Positionssensor (8a) aufweist, der derart eingerichtet ist, dass er dem Taster (7a) gegenüberliegt, um elektrisch den direkten Kontakt zwischen dem Kopf der Brennelemente und dem Zangenschaft zu erfassen.

9. Greifvorrichtung (P) nach einem der Ansprüche 6 bis 8, bei der
- der Hauptwagen Finger (111) aufweist, die orthogonal zu der Längsachse (XX') kippend montiert sind,
- der Zangenkörper (6) eine Wand (600) mit Rücksprüngen (600d) aufweist,
- die Welle (12) Reliefs (110), die an ihrem Umfang befestigt sind, aufweist, wobei das Kuppeln zwischen der Zange (6) und der Welle (12) durch das Kippen der Finger (111) durch die Reliefs (110) und durch das Aufliegen der gekippten Finger (111) gegen die Rücksprünge (600d) des Körpers (60) der Zange (6) ausgeführt wird.

10. Greifvorrichtung (P) nach Anspruch 9, die als Mittel zum Verriegeln der Kupplung zwischen dem Hauptkörper (1) und der Zange (6) einen Stift (64) aufweist, der in die Wand (600) des Körpers (60) der Zange (6) quer zu der Längsachse (XX') des Hauptkörpers eingefügt ist und das Blockieren in Verschiebung des einen (1) in Bezug zu dem anderen (6) erlaubt, wobei der Stift (64) angepasst ist, um durch fernbediente Mittel entfernt zu werden.

11. Greifvorrichtung (P) nach Anspruch 9 oder 10, bei der:
- die Hohlwelle (12) einen Vorsprung (7a) aufweist, der sich quer zu der Achse (XX') erstreckt, indem er einen Taster bildet,
- der Hauptwagen (1) einen ersten und einen zweiten Positionssensor (8a, 8b) aufweist, die jeweils derart eingerichtet sind, dass sie gegenüber dem Taster (7a) in einer gegebenen verschobenen Position der Hohlwelle (12) sind, um elektrisch eine gegebene verschobene Position der Reliefs (110) und daher des Kippens oder nicht der Finger (111) zu erfassen.

12. Greifvorrichtung (P) nach Anspruch 11, bei der:
- der Körper (60) der Zange (6) einen Vorsprung aufweist, der sich quer zu der Achse (XX') erstreckt, indem er einen Taster (7b) bildet,
- der Hauptwagen (1) einen dritten Positionssensor (8c) aufweist, der derart eingerichtet ist, dass er, sobald die Zange (6) mit dem Hauptwagen gekuppelt ist, gegenüber dem Taster (7b) liegt, der daher elektrisch die Gegenwart der Zange (6) erfasst.

13. Handhabungssystem (S) von Brennelementen, das Folgendes aufweist:
- eine Greifvorrichtung (P) nach einem der vorhergehenden Ansprüche,
- eine Kippbrücke, die einen Schaft (5) aufweist, in dem die Wagen (1, 17; 2) der Greifvorrichtung (P) montiert sind,
- eine Handhabungskette, die eine Hub-/Schubkette aufweist, von der ein Teil an den Befestigungsmitteln (20) des Nebenwagens (2) der Greifvorrichtung (P) befestigt ist, wobei die Hub-/Schubkette die Greifvorrichtung (P) in horizontaler Position aus dem Schaft der Kippbrücke heraus rollen lässt.

14. Handhabungsverfahren von Kernbrennelementen gemäß dem, im Fall des Versagens bei einem Betriebshandhabungsvorgang:
- man einen Teil (1, 16, 17) einer Greifvorrichtung (P) von Brennelementen an mechanischen Hilfshandhabungsmitteln (S) befestigt,
- man den Teil (1, 16, 17) der Greifvorrichtung (P), der an den mechanischen Hilfsmitteln befestigt ist, von dem Rest (2, 20) der Greifvorrichtung (P), der an den mechanischen Betriebshandhabungsmitteln befestigt ist, mit Hilfe fernbedienter Mittel abkuppelt.

15. Handhabungsverfahren nach Anspruch 14, gemäß dem der Handhabungsvorgang entweder ein Hub oder ein Kippen zur Horizontalen oder ein horizontaler Schub ist.

16. Verfahren nach Anspruch 15 oder 14, bei dem das Betätigen der fernbedienten Mittel eine einzige Zug-/Schubbewegung ausführt, die die Teile der Greifvorrichtung (1, 16, 17; 2) einen (1, 16, 17) von dem anderen (2) trennt.

## Claims

1. Nuclear fuel elements gripping device (P) comprising:
- a main carriage (1) with a longitudinal axis (XX'),
- a clamp (6) coupled to the main carriage and adapted to grip the head of fuel elements,
- a secondary carriage (2) with a longitudinal axis (XX') comprising attachment means (20), device in which the main carriage and the secondary carriage are coupled to each other by means (170, 2; 171, 2121) for transmitting forces applied on the attachment means (20) when the device is lifted and when the device is pushed horizontally, the force transmission means being removably connected between the main carriage and the secondary carriage, device in which the main carriage and the secondary carriage are uncoupled from each other when the secondary carriage is blocked at its attachments by disassembling the connection of the force transmission means from the carriages, disassembly being made by a single pull/push movement applied on the main carriage (1), tension being made towards the secondary carriage (2).

2. Gripping device (P) according to claim 1, in which recoupling between the main carriage (1) and the secondary carriage (2) is done when the secondary carriage is blocked at its attachments (20), by reassembling the connection of force transmission means with the carriages, the connection being reassembled following a single push/pull movement applied to the main carriage (1), the pushing being made towards the secondary carriage (2).

3. Gripping device (P) according to claim 1 or 2, in which the force transmission means (170, 2; 171, 2121) which are removably connected between the main carriage and the secondary carriage comprise:
- a first key (170), mounted on the main carriage(1) tipping transverse to the longitudinal axis (XX') and stopped against the secondary carriage (2) to enable forces applied on the attachment means to be transmitted during the horizontal push,
- a second key (171), mounted on the main carriage pivoting orthogonally to the longitudinal axis (XX') and stopped (2121) against the secondary carriage to enable forces applied on the attachment means (20) to be transmitted during lifting; device in which the tension applied on the main carriage enables tipping of the first key (170), the relative movement of the main carriage towards the secondary carriage and then pivoting of the second key, the first tipped key and the second pivoted key each remaining in a position without a stop in contact with the secondary carriage.

4. Gripping device (P) according to any one of the previous claims, in which the main carriage comprises two rigid parts (9, 10, 11, 12; 17) connected to each other through an intermediary connecting system (16), in which:
- one part (9, 10, 11, 12) is coupled with the clamp (6) and comprises an electronic weigh scale (15) to electrically test tension or compression forces applied on said rigid part (9,10,11,12) supporting the clamp (6);
- the other (17) comprises a so-called head carriage (17) coupled with the secondary carriage (2) and a gripping dish (161) by which the uncoupling pull/push movement between the head carriage (17) and the secondary carriage (2) is performed.

5. Gripping device (P) according to any one of the previous claims, in which the main carriage comprises:
- an electric motor (9),
- a hollow shaft (11, 12) mounted in translation with one of its ends fitted with a screw/nut type drive (91) with the electric motor, and the other of its ends (120) bearing on part (611) of the clamp (6) gripping arms (61), actuation of the electric motor (9) causing translation of the shaft (12) in one direction and simultaneously moving the gripping arms (61) of the clamp (6) towards or away from each other by tipping orthogonally to the axis (XX').

6. Gripping device according to claim 5, comprising a coupling lever (10) fixed to the main carriage (1) and arranged to form a lever arm to translate the shaft (11, 12) and uncouple it from the clamp, the lever arm being adapted so that it can be manipulated by remotely operated means.

7. Gripping device according to claim 5 or 6, in which:
- the clamp (6) comprises a body (60) on which the gripping arms (61) are installed free to tip and on which a rod (62) is installed free to slide along the axis (XX') between the arms (61),
- the hollow shaft (12) comprises a rod (120) fixed inside it, the rod (120) of the hollow shaft bearing in contact with the clamp rod (62), the length of the clamp rod being such that in the near or the far extreme position of the clamp arms corresponding to the gripping position of the fuel element head, there is a direct contact between the head and the clamp rod.

8. Gripping device (P) according to claim 7, in which:
- the rod fixed inside the hollow shaft (12) comprises a projection (7a) that extends transverse to the axis (XX') forming a flag,
- the main carriage (1) comprises a first position detector (8a) arranged so as to be facing the flag (7a) so that it electrically detects direct contact between the head of the fuel elements and the clamp rod.

9. Gripping device (P) according to one of claims 6 to 8, in which
- the main carriage comprises pins (111) installed to tip orthogonally to the longitudinal axis (XX');
- the clamp body (6) comprises a wall (600) with steps (600d);
- the shaft (12) comprises protrusions (110) fixed to its periphery; coupling between the clamp (6) and the shaft (12) being made by the protrusions (110) tipping the pins (111) and by the tipped pins (111) bearing in contact with the steps (600d) in the body (60) of the clamp (6).

10. Gripping device (P) according to claim 9, comprising, as locking means for coupling the main body (1) and the clamp (6), a peg (64) inserted inside the wall (600) of the body (60) of the clamp (6) transverse to the longitudinal axis (XX') of the main body to block one (1) in translation relative to the other (6), the peg (64) being designed so that it can be removed by remote-operated means.

11. Gripping device (P) according to claim 9 or 10, in which:
- the hollow shaft (12) comprises a projection (7a) that extends transverse to the axis (XX') forming a flag,
- the main carriage (1) comprises a first and a second position detector (8a, 8b) each arranged so as to be facing the flag (7a) in a given translated position of the hollow shaft (12) to electrically detect a given translated position of the protrusions (110) and therefore detect whether or not the pins (111) are tipped.

12. Gripping device (P) according to claim 11, in which:
- the body (60) of clamp (6) comprises a projection that extends transverse to the axis (XX') forming a flag (7b),
- the main carriage (1) comprises a third position detector (8c) arranged to be facing the flag (7b) when the clamp (6) is coupled with the main carriage, and the flag thus electrically detects the presence of the clamp (6).

13. Fuel element handling system (S) comprising:
- a gripping device (P) according to one of the previous claims,
- a tipping crane comprising a drum (5) in which carriages (1,17; 2) of the gripping device (P) are installed,
- a handling system comprising a lifting/pushing system, part of which is fixed to the attachment means (20) of the secondary carriage (2) of the gripping device (P), the lifting/pushing system rolling the gripping device (P) into the horizontal position towards the outside of the tipping crane drum.

14. Method for handling nuclear fuel elements in which if a failure occurs during a handling operation:
- part (1, 16, 17) of a fuel elements gripping device (P) is attached to mechanical standby handling means,
- part (1, 16, 17) of the gripping device (P) attached to the mechanical standby means is uncoupled from the remaining (2, 20) of the gripping device (P) attached to the mechanical operational handling means using remote-operated means.

15. Handling method according to claim 14, in which the handling operation is either lifting, or horizontal tipping or horizontal pushing.

16. Method according to claim 14 or 15, according to which the actuation of the remote-operated means makes a single pull/push movement separating the parts (1, 16, 17) and (2) of the gripping device (1, 16, 17; 2) from each other.
